# EUROPEAN PATENT APPLICATION

(11) **EP 1 988 314 A2**
(43) Date of publication of application: **05.11.2008**
(21) Application number: 08103768.1
(22) Date of filing: 29.04.2008
(51) Int. Cl.: F16K 5/04, F16K 11/085

(54) **Valve**

(30) Priority: 04.05.2007 IT MI20070886
(71) Applicant: Barberi Rubinetterie Industriali S.r.l., 13018 Valduggia (VC) (IT)
(72) Inventor: Barberi, Michele, 13018 Valduggia (Vercelli) (IT)
(74) Representative: Ponzellini, Gianmarco

(57) **Abstract**

A valve comprising: an internally hollow main body (2) having at least one inlet opening (3) and at least one outlet opening (4) in fluid communication with each other; a closure member (6) rotatably in engagement inside said main body (2) so as to rotate between an open position at which it allows passage of fluid from said inlet opening (3) to said outlet opening (4) and a closed position at which it inhibits passage of fluid between the inlet opening (3) and the outlet opening (4); a substantially annular support (15) disposed at least at one of said openings (3, 4) and defining a through cavity (16) for enabling passage of fluid in the open position of said closure member (6), the support (15) having a first sealing element (18) in contact with an inner surface of said main body (2) and a second sealing element (19) in contact with an outer surface (8b) of said closure member (6); the sealing element (18) being in mechanical and/or chemical clinging relationship with the support (15).

## Description

The present invention relates to a valve. In particular, the present invention relates to a rotary valve, such as a cock or tap, adapted to regulate the flow rate of a fluid.

This valve will be advantageously suitable to intercept the water flow in heating plants or also in air-treatment plants, such as zone plants or fan-coil plants, to be mounted on modular headers and similar applications.

It is known that rotary valves, for water regulation in gas-fired boilers, are made up of an internally hollow main body, provided with an inlet duct and at least one fluid outlet duct.

A closure member of a substantially cylindrical conformation extends within the main body, said member being generally servo-assisted to be automatically moved to respective working conditions.

In more detail, the closure member consists of a hollow tubular body of circular section and provided with an open end in fluid communication with the inlet duct. On the side opposite to the open end a closed end extends from which a rod emerges which at least partly projects from the main body. The rod is preferably connected to a mechanical actuating member, adapted to rotate the tubular body around a respective longitudinal axis so as to define the above mentioned working conditions.

The closure member further has at least one through cavity made in the side wall of the tubular body and adapted to enable passage of fluid when the cavity is disposed in register with the outlet duct.

In this way, the tubular body is rotated between a respective open condition at which the through cavity is placed in register with the outlet duct to enable passage of fluid, and a closed condition at which the through cavity is distal from the outlet duct and the side wall of the tubular body closes the outlet duct to prevent passage of fluid therethrough.

Known valves are further provided with at least one sealing element interposed between the outlet duct of the main body and the side wall of said tubular body. The sealing element enables the fluid to be hermetically sealed to avoid seepage though hollow spaces defined between the closure member and the body itself.

The sealing element generally consists of a rigid support coaxially inserted into the outlet duct and provided with a cavity for fluid passage. The support carries a first sealing ring, made of elastically deformable material and coaxial with the passage cavity. The first sealing ring is inserted and constrained generally by gluing, into a recess formed in the support and projects from the latter so as to adhere to the side wall of the tubular body. In this way, when the closure member is rotated, the side wall slides with pressure on the first ring thus maintaining a fluid-tight condition between the closure member and main body.

The support further has a second ring associated with an outer surface of the support itself and projecting from this surface to abut against the inner surface of the outlet duct.

Under this situation, the second ring prevents fluid seepage between the support and inner walls of the outlet duct.

The above described known valves however have important drawbacks mainly connected with the structure of the sealing element.

A first drawback resides in the weak fluid tightness carried out by the first ring that is continuously submitted to mechanical stresses by the closure member. In fact, as described above, in order to ensure a good fluid tightness, the first ring must always remain in abutment against the side wall of the tubular body. Consequently, the continuous sliding or rubbing action between the side wall and ring causes deformation of the ring itself thus creating small inlets and apertures for passage of the fluid.

It is also to be considered that, following many sudden movements of the closure member carried out by said mechanical members, the first ring can become unglued and come out of the respective recess.

Under this situation, although the first ring is engaged in the respective hollow space by means of adhesive substances, rotation of the tubular body can drive it out of said annular recess.

In addition, due to automatic movement of the closure member, displacement of the first ring from the hollow space is not generally detected. In other words, unlike in the case of manual movement of the closure member in which the operator can perceive incorrect positioning of the ring, in the case of servoassisted valves the mechanical members go on working also under conditions of wrong positioning of the sealing ring.

A further drawback is the structural complexity of the whole support which must be submitted to assembling operations for being coupled to the two rings. These assembling operations greatly increase the manufacturing time of each individual valve.

Under this situation, the technical task underlying the present invention is to conceive a valve capable of substantially eliminating the mentioned drawbacks.

Within the scope of this technical task, it is an important aim of the invention to conceive a valve capable of ensuring a fluid tightness between the fixed and moving parts, also following many driving actions and in case of sudden rotations of the closure member.

It is a further aim of the present invention to conceive a valve of simple construction and reduced production costs.

The technical task mentioned and the aims specified are substantially achieved by a valve characterised in that it comprises the technical solution hereinafter claimed.

Description of a preferred but not exclusive embodiment of a valve in accordance with the invention is now taken by way of non-limiting example and illustrated in the accompanying drawings, in which:
- Fig. 1 is an elevation side view in section of the valve according to the invention;
- Fig. 2 is an elevation side view in section of a construction detail in Fig. 1;
- Fig. 2a shows the element in Fig. 2 in an elevation side view;
- Fig. 3 is a perspective front view of a further detail in Fig. 1;
- Fig. 4 is a perspective view of the detail seen in Fig. 3, partly in section; and
- Fig. 5 is a perspective rear view of the detail seen in Fig. 3, partly in section.

With reference to the drawings, the valve in accordance with the invention is generally identified by reference numeral 1.

In particular, valve 1 being the object of the present invention is a rotary valve of the "cock" type, advantageously used in heating plants to regulate water delivery.

However, it will be appreciated that the present invention applies to valves of any type, adapted to regulate passage of a fluid in a liquid or gaseous state.

In particular, valve 1 comprises an internally hollow main body 2 having at least one inlet opening 3 and at least one outlet opening 4 mutually in fluid communication.

Preferably, the main body 2 has two outlet openings 4 housed at diametrically opposite sides and extending along the same longitudinal axis. Under this situation, it is to be noted that the inlet opening 3 is disposed between the two outlet openings 4 and extends along a longitudinal axis perpendicular to the extension axis of the outlet openings 4.

It is apparent at all events that the number and geometry of the inlet and outlet openings can be different and determined as a function of the design and the operating requirements; alternatively, also more inlet openings than outlet openings can be present.

Advantageously, the inlet openings 3 and outlet openings 4 are defined by inner surfaces 3a, 4a of respective internally hollow ducts 5, adapted to be connected to suitable pipes for passage of the fluid, not shown in the drawings as they are not part of the present invention.

Rotatably housed within the main body 2 is a closure member 6 that can be rotated between an open position at which it allows fluid passage from the inlet opening 3 to at least one of said outlet openings 4, and a closed position at which it inhibits fluid passage between the inlet opening 3 and outlet opening 4.

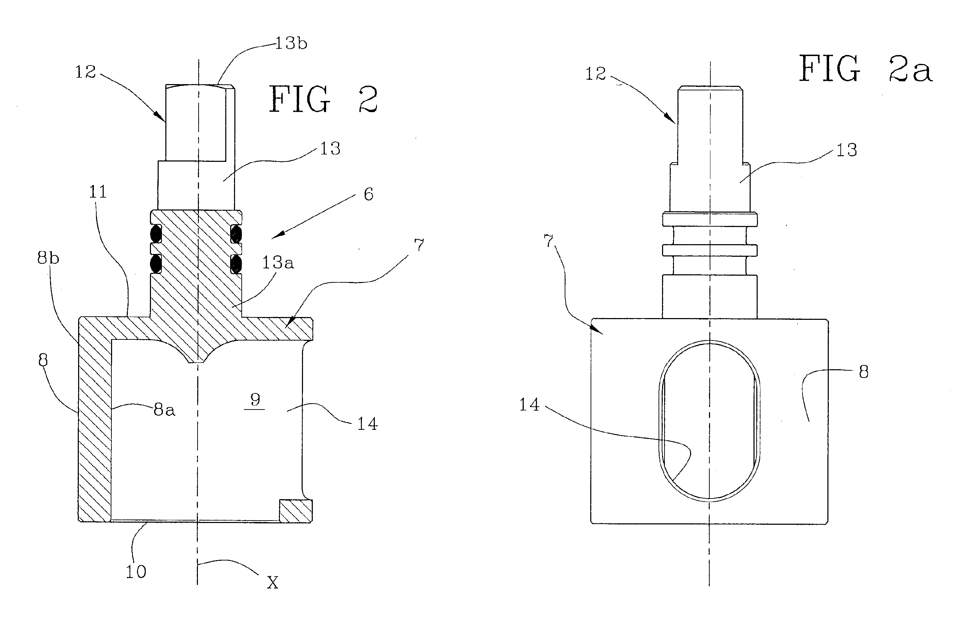

Looking in particular at Fig. 2, the closure member 6 consists of a tubular body 7 defined by a cylindrical wall 8 preferably of circular cross section.

As better depicted in Fig. 2, the cylindrical wall 8 has a respective inner surface 8a defining a passage chamber for the fluid, and an outer surface 8b.

The tubular body 7 further has a first end 10 that is open and disposed at the inlet opening 3 being coaxial therewith to enable passage of fluid into chamber 9. On the side opposite to the first open end 10 a second end 11 extends which is closed and from which a grip portion 12 emerges.

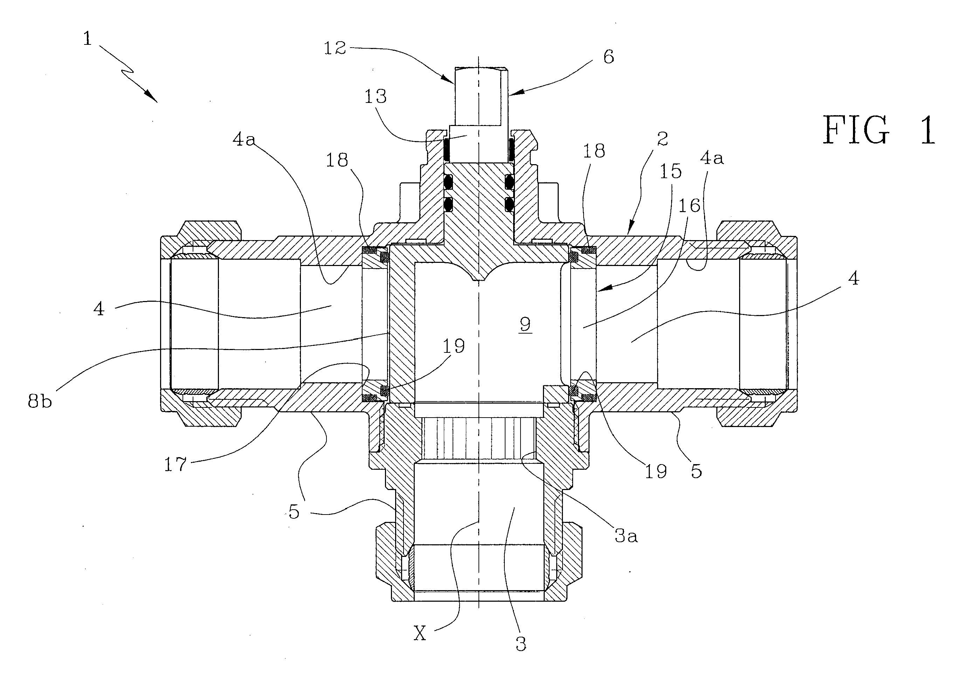

In particular, the grip portion 12 consists of a rod 13 of a substantially cylindrical conformation and having a first end 13a connected to said closed end 11, and a second end 13b opposite to the first one 13a and jutting out of the main body 2 (Fig. 1).

The grip portion 12 extends along a rotation axis X of the closure member 6 and can be advantageously connected to a mechanical actuating member adapted to impose a rotation to the whole tubular body 7. The mechanical actuating member, not shown as it is of known type and is not part of the present invention, can be associated with the second end 13b of rod 13 to automatically operate regulation of the fluid flow.

Preferably, the mechanical member is provided with an electronic activation unit to move the closure member 6 depending on a command signal representative of the operating condition of the valve.

The tubular body 7 further has at least one passage opening 14 (Figs 2 and 2a) formed in the cylindrical wall 8 and disposed, in the respective open condition, in register with an outlet opening 4 (Fig. 1).

Under this situation, the fluid coming from the inlet opening 3 and passing through the open end 10 and chamber 9 can flow along the passage opening 14 of the closure member 6 towards an outlet opening 4 of the main body 2 (Fig. 1).

In the closed position of the closure member 6, the passage opening 14 is positioned at the inner wall of the main body 2 and the outer surface 8b of the cylindrical wall 8 faces the outlet openings 4 to close the latter and prevent passage of fluid.

Advantageously, the closure member 6 can be provided with a plurality of passage openings 14 formed in the cylindrical wall 8. Under this situation, in the open position of the closure member 6 at least one of said openings 14 is disposed in register with a respective outlet opening 4.

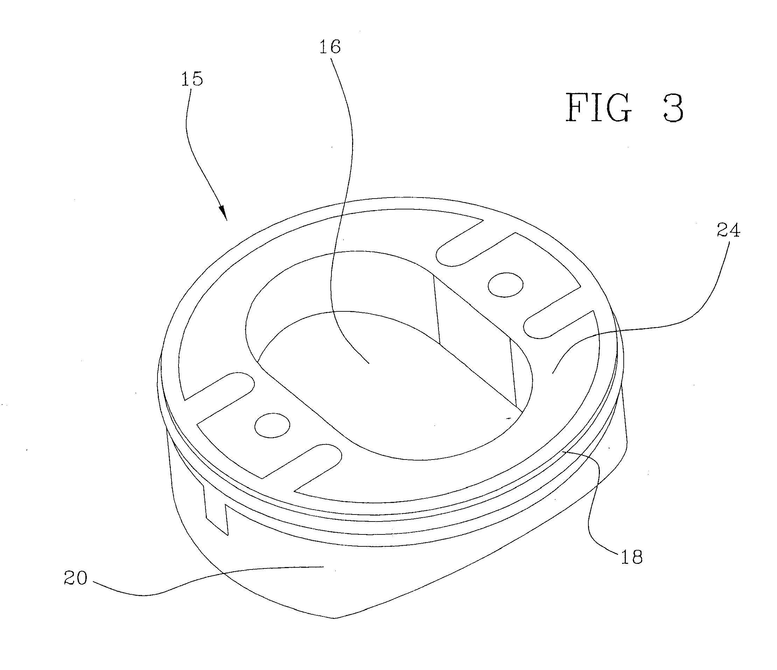

Valve 1 further comprises at least one support 15 interposed between the closure member 6 and an outlet opening 4 (Figs. 3-5).

In particular, support 15 has a substantially annular conformation and defines a through cavity 16 to enable passage of fluid in the open position of the closure member 6.

Advantageously, valve 1 has one support 15 for each outlet opening 4 which is coaxial with the through cavity 16 of the respective support 15.

It will be recognised that support 15 could be also present at the inlet opening, should for example the inlet opening be coaxial with the outlet.

As clearly shown in Fig. 1, each support 15 is housed in a respective annular seat 17 formed in the inner wall of the main body 2.

Support 15 is provided with a first sealing element 18 in contact with the inner surface of the main body 2 (adapted to work under static conditions), and a second sealing element 19 in contact with the outer surface 8b of the cylindrical wall 8 (and therefore adapted to work under dynamic conditions).

Under this situation, when the closure member 6 rotates around the rotation axis X between the open and closed positions, the cylindrical wall 8 slides with pressure on the second sealing element 19 preventing fluid escape between the closure member 6 and main body 2.

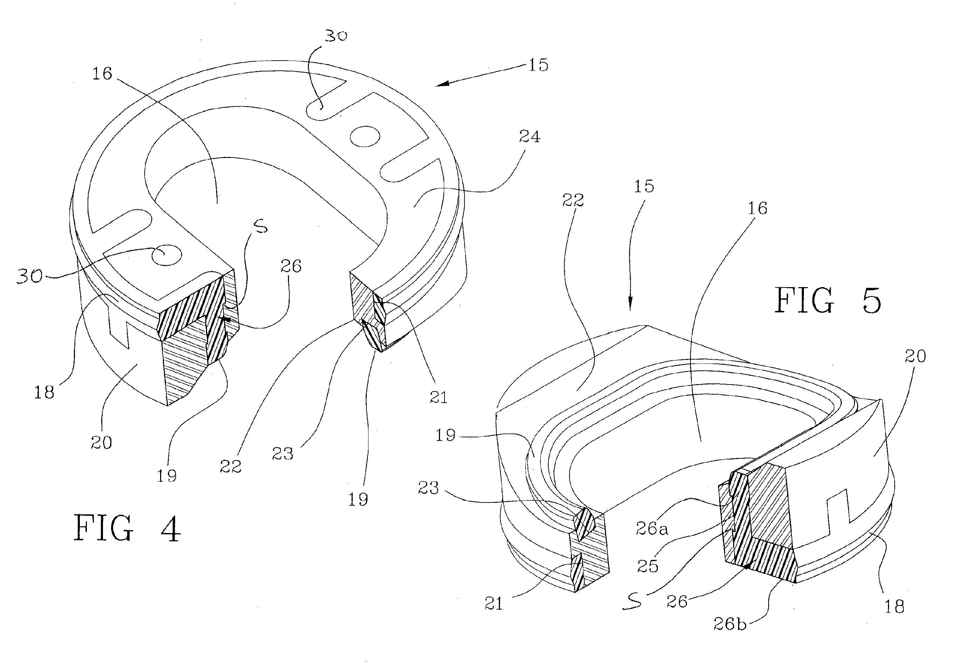

In more detail, as shown in Figs. 3 to 5, support 15 has a peripheral surface 20 facing the inner surface of the main body 2 and having a substantially cylindrical extension concentric with a central axis of the respective through cavity 16. An annular recess 21 is formed along the whole extension of the peripheral surface 20, which recess is adapted to house the first sealing ring 18 having a substantially annular conformation too. Referring particularly to Figs. 4 and 5, it is to be noted that the first sealing element 18 partly projects from the peripheral surface 20 so that it closely adheres to the inner surface of the main body 2.

Support 15 further has a first annular surface 22 facing the outer surface 8b of the cylindrical wall 8 and extending around said through cavity 16.

The first surface 22 is provided with a recess 23 of an annular conformation too and extending around the through cavity 16. Recess 23 is adapted to hold the second sealing element 19 which, as better shown in Fig. 5, partly projects from the first annular surface 22 to be always in contact with the closure member 6.

Preferably, the first annular surface 22 has a concave extension and its shape matches that of the outer surface 8b of the cylindrical wall 8. In other words, the first annular surface 22 extends on a cylindrical surface having an extension axis coincident with the rotation axis X of the closure member.

On the opposite side from the first annular surface 22, a second annular surface 24 extends (Figs. 3 and 4) which has a flat extension and is perpendicular to said peripheral surface 20. Note that recess 21 housing the first sealing element 18 is formed in a junction region between the second annular surface 24 and the peripheral surface 20.

Referring in particular to Figs. 4 and 5, the sealing elements 18 and 19 in a preferred but not exclusive embodiment are of one piece construction, preferably of a material different from that of support 15. In other words, the sealing elements 18 and 19 are mutually in engagement without a break so as to define a single body.

Advantageously, support 15 is made of rigid plastic material (nylon reinforced with glass, for example), while the sealing elements 18 and 19 are made of elastically deformable plastic material, such as rubber, to enable them to better adhere to the inner wall of the main body 2 and the outer surface 8b of the cylindrical wall 8 thus preventing passage of fluid.

In detail, in the embodiment shown in Figs. 3-5, the sealing elements 18, 19 have at least one connecting portion 25 adapted to join the sealing elements 18, 19 and housed in a respective space 26 formed in support 15.

In more detail, support 15 is provided with a series of spaces 26 facing the through cavity 16 and adapted to hold the respective connecting portions 25.

Still referring to Figs. 4 and 5, each space 26 consists of a first length 26a extending within support 15 and communicating with recess 23 of the first annular surface 22, and a second length 26b perpendicular to the first one 26a, formed in the second annular surface 24 and in communication with recess 21 of the second surface 24 itself.

Under this situation, each connecting portion 25 extending along said lengths 26a, 26b of space 26 has a substantially L-shaped conformation.

Alternatively, a mechanical constraint can be created between the dynamic sealing element 19 and support 15 without said sealing element 19 being of one piece construction with the other sealing element 18 (that in this configuration could merely be an O-ring housed in a respective hollow space); for instance, in support 15 suitable cavities preferably with undercuts S could be created into which the rubber-like material injected on piece 15 could penetrate and become stably linked thereto, once solidified, so as to define the sealing element 19.

This mechanical constraint 30, together with or independently of the manufacture of one piece construction of both sealing elements 18, 19, will prevent the sealing element 19 from separating from support 15.

Advantageously, the sealing elements 18, 19 are obtained by injection or casting of the plastic material (rubber) directly on the support element. In this manner said mechanical constraints can be created and when they are present, the through spaces 26 for holding the connecting portions allow passage of the plastic material in a liquid state from recess 21 of the peripheral surface 20 to recess 23 of the first annular surface 22 so that a single body defining the two sealing elements 18, 19 is obtained.

It is also important to note that the particular production process allows a further constraining system of the sealing element 19 to be adopted (which element 19 is the most problematic because it is submitted to different stresses in the operations for opening and closing the valve).

In fact, since the sealing element 19 is made by injection of material on the support 15 already formed, also a chemical constraint or clinging action of the sealing element 19 in recess 23 is created. In particular, during the injection process a small portion of the viscous material defining the sealing element 19 penetrates into the porosities of the support surface making said element 19 integral with element 15 along all contact surfaces.

Obviously, in this case a chemical clinging action is obtained also with reference to the sealing element 18.

The above is able to ensure a much more efficient coupling than a coupling obtained with an adhesive, also in the absence of the above highlighted mechanical constraints.

In the preferred embodiment herein shown a chemical clinging action of both sealing elements 18, 19 is carried out, which is particularly efficient in the support regions of smaller section and where the mechanical constraints are absent; vice versa at the surface of greater section (straight side of support 15) where stresses on the sealing element caused by the closure member in the opening/closing movement are greater, also the mechanical constraints 30 are present which ensure maintenance of the position of the sealing element and therefore the sealing action itself.

The invention achieves important advantages.

In fact, first of all it is to be pointed out that the second sealing element 19 in contact with the cylindrical wall 8 is clung to support 15 by mechanical and/or chemical constraint. Consequently, also after repeated and sudden rotations of the closure element 6, the second sealing element 19 remains within the respective recess 23 without being submitted to structural deformation.

Therefore fluid tightness between the closure member 6 and main body 2 is ensured.

In addition, support 15 is of simple construction and reduced manufacturing and especially assembling costs. This advantage results from the fact that in a single casting or injection operation the two sealing elements 18, 19 are coupled at the inside of support 15.

## Claims

1. A valve comprising:
- an internally hollow main body (2) having at least one inlet opening (3) and at least one outlet opening (4) in fluid communication with each other;
- a closure member (6) rotatably in engagement inside said main body (2) so as to rotate between an open position at which it allows passage of fluid from said inlet opening (3) to said outlet opening (4) and a closed position at which it inhibits passage of fluid between the inlet opening (3) and the outlet opening (4) ;
- a substantially annular support (15) disposed at least at one of said openings (3, 4) and defining a through cavity (16) for enabling passage of fluid in the open position of said closure member (6), said support (15) having a first sealing element (18) in contact with an inner surface of said main body (2) and a second sealing element (19) in contact with an outer surface (8b) of said closure member (6);
**characterised in that** said support (15) preferably comprises at least one inner cavity defining an undercut (5), at least said first sealing element (19) being made by injection on the support (15) so that a chemical clinging action or a mechanical constraint is obtained between the first sealing element (19) and the support (15), said mechanical constraint occurring at said cavities with an undercut (5), for example.

2. A valve as claimed in the preceding claim, **characterised in that** said sealing elements (18, 19) are made of one piece construction and preferably of a material different from the material of which the support (15) is made, for instance said sealing elements (18, 19) being made of an elastically deformable plastic material in order to prevent passage of liquid between the support (15) and the surfaces of the main body (2) and of the closure member (6).

3. A valve as claimed in anyone of the preceding claims, **characterised in that** said support (15) has a peripheral surface (20) facing the inner surface of the main body (2) and having a substantially cylindrical extension concentric with a central axis of said through cavity (16); said first sealing element (18) being housed in a recess (21) formed in said peripheral surface (20) and jutting at least partly out of said peripheral surface (20).

4. A valve as claimed in anyone of the preceding claims, **characterised in that** said support (15) has a first annular surface (22) facing the outer surface (8b) of said closure member (6) and extending around said through cavity (16); said second sealing element (19) being housed in a recess (23) formed in said first annular surface (22) and jutting at least partly out of said first annular surface (22).

5. A valve as claimed in claims 3 and 4, **characterised in that** said recesses (21, 23) formed in the annular surface (22) and the peripheral surface (20) have an annular profile concentric with the central axis of said through cavity (16).

6. A valve as claimed in claims 3 and 4 or 5, **characterised in that** the sealing elements (18, 19) further comprise at least one connecting portion (25) in engagement with said sealing elements (18, 19) and housed in a space (26) formed in the support (15).

7. A valve as claimed in the preceding claim, **characterised in that** said sealing elements (18, 19) comprise a plurality of connecting portions (25) housed in respective spaces (26) disposed in side by side relationship with the through cavity (16).

8. A valve as claimed in anyone of claims 3 to 7, **characterised in that** said support (15) further comprises a second annular surface (24) having a flat extension, which is opposite to said first annular surface (22) and perpendicular to the peripheral surface (20); said recess (21) housing the first sealing element (18) being formed in a junction region between said second annular surface (24) and said peripheral surface (20).

9. A valve as claimed in anyone of claims 4 to 8, **characterised in that** said first annular surface (22) has a concave extension, the shape of which matches the outer surface (8b) of said closure member (6).

10. A valve as claimed in anyone of the preceding claims, **characterised in that** said closure member (6) comprises a tubular body (7) having a cylindrical wall (8) of substantially circular cross section which defines said outer surface (8b), said closure member (6) being rotatable around a respective rotation axis (X) perpendicular to a central axis of the through cavity (16) of the support (15); said cylindrical wall (8) during rotation between the respective open position and closed position carrying out a rubbing action on the second sealing element (19).

11. A valve as claimed in the preceding claim, **characterised in that** said tubular body (7) further comprises a first end (10) which is open and is disposed at said inlet opening (3) of the main body (2) so as to enable passage of fluid to the inside of the tubular body (7), and a second end (11) opposite to the first one (10) which is closed and has a grip portion (12) at least partly projecting from said main body (2); said grip portion (12) extending along said rotation axis (X) and being suitable for connection with a mechanical actuating member for rotating the tubular body (7).

12. A valve as claimed in the preceding claim, **characterised in that** said mechanical member comprises an electronic activation unit to move the closure member (6) depending on a command signal representative of the operating condition of the valve.

13. A valve as claimed in claim 11 or 12, **characterised in that** said tubular body (7) further comprises at least one passage opening (14) formed in said cylindrical wall (8) and disposed, in the open position of the closure member (6), in register with the through cavity (16) of the support (15) so as to allow passage of fluid from the first end (10) of the tubular body (7) to the outlet opening (4).

14. A valve as claimed in the preceding claim, **characterised in that** said tubular body (7) comprises a plurality of passage openings (14) formed in the cylindrical wall (8), at least one of said passage openings being disposed, in the open position of the closure member (6) in register with the through cavity (16) of the support (15).

15. A valve as claimed in anyone of the preceding claims, **characterised in that** said main body (2) has two outlet openings (4) and **in that** said valve comprises two supports (15), each of them being housed in a corresponding outlet opening (4).
